# EUROPEAN PATENT APPLICATION

(11) **EP 4 765 930 A1**
(43) Date of publication of application: **24.06.2026**
(21) Application number: 24853766.4
(22) Date of filing: 13.08.2024
(51) Int. Cl.: H04W 24/06

(54) **COMMUNICATION METHOD AND APPARATUS**

(30) Priority: 14.08.2023 CN 202311024564
(71) Applicant: Beijing Unisoc Communications Technology Co., Ltd, Beijing 100083 (CN)
(72) Inventor: WANG, Hualei, Beijing 100083 (CN)
(74) Representative: Petraz, Gilberto Luigi
(86) International application number: PCT/CN2024/111726
(87) International publication number: WO 2025/036357

(57) **Abstract**

The embodiments of this application disclose a communication method and apparatus. The method is applied to a terminal device and includes: receiving configuration information, wherein the configuration information is used to determine a performance evaluation result of a first model, the first model is an artificial intelligence model or a machine learning model, and the first model is used to predict channel information and/or Channel State Information (CSI); determining the performance evaluation result of the first model based on the configuration information. This method allows the terminal device to evaluate the performance of the first model used to predict channel information and/or Channel State Information (CSI), which is beneficial to improving the accuracy of predicting the channel information and/or the CSI by using the first model.

## Description

### CROSS-REFERENCE TO RELATED APPLICATION

This application claims the priority to Chinese patent application No. 202311024564.4, entitled "communication method and apparatus", filed with the China National Intellectual Property Administration on 14 August 2023, the entire contents of which are incorporated herein by reference.

### TECHNICAL FIELD

This application relates to the field of communication technology, and in particular, to a communication method and apparatus.

### BACKGROUND

Currently, Artificial Intelligence (AI) technology has been introduced into communication systems. For example, an intelligent model, such as an AI model or a Machine Learning (ML) model, is used to predict channel information and/or Channel State Information (CSI), thereby obtaining a prediction of the CSI, so that CSI fed back by a terminal device to a network device has higher accuracy, and a subsequent transmission can better match a channel environment.

However, during use of an intelligent model by a terminal device, a performance of the intelligent model may change. Therefore, how the terminal device monitors the performance of the intelligent model is a problem to be urgently solved.

### SUMMARY

Embodiments of this application provide a communication method and apparatus, which enable a terminal device to evaluate the performance of a first model used to predict channel information and/or Channel State Information (CSI).

In a first aspect, an embodiment of this application provides a communication method. The method includes: receiving, by a terminal device, configuration information, wherein the configuration information is used to determine a performance evaluation result of a first model, the first model is an artificial intelligence model or a machine learning model, and the first model is used to predict channel information and/or Channel State Information (CSI); determining, by the terminal device, the performance evaluation result of the first model based on the configuration information.

It can be seen that, in the embodiments of this application, the terminal device performs performance evaluation on the first model used to predict channel information and/or CSI based on the received configuration information, which is beneficial to improving the accuracy of predicting the channel information and/or the CSI by using the first model.

In an optional implementation, the configuration information includes a first Channel State Information (CSI) report configuration and a second CSI report configuration associated with the first CSI report configuration; the first CSI report configuration is configured to use the first model to predict the channel information and/or the CSI, and the second CSI report configuration is configured to evaluate a performance of the first model.

In an optional implementation, when the configuration information includes the first CSI report configuration and the second CSI report configuration, the determining, by the terminal device, the performance evaluation result of the first model based on the configuration information includes: predicting the channel information and/or the CSI based on the first CSI report configuration and the first model to obtain first information, wherein the first information is first CSI and/or first channel information; evaluating the performance of the first model based on the second CSI report configuration and the first information to obtain a first performance evaluation result.

In an optional implementation, the first performance evaluation result is represented by an accuracy of the first information, and/or by a similarity between the first information and second information; the second information is obtained by the terminal device without using the first model; the second information is second CSI and/or second channel information.

In an optional implementation, when the first information is the first CSI, the second information is the second CSI; when the first information is the first channel information, the second information is the second channel information.

In an optional implementation, the terminal device reports a first CSI report and a second CSI report, wherein the first CSI report includes the first CSI, and the second CSI report includes the first performance evaluation result and/or the second CSI and/or the second channel information.

In another optional implementation, when the accuracy of the first information is greater than a first preset value, and/or the similarity between the first information and the second information is greater than a second preset value, the terminal device reports a first CSI report and a second CSI report, wherein the first CSI report includes the first CSI, and the second CSI report includes the first performance evaluation result and/or the second CSI and/or the second channel information.

In yet another optional implementation, when the accuracy of the first information is less than or equal to a first preset value, and/or the similarity between the first information and the second information is less than or equal to the second preset value, the terminal device reports a second CSI report, wherein the second CSI report includes the first performance evaluation result and/or the second CSI and/or the second channel information.

In another optional implementation, the configuration information includes a third CSI report configuration; the third CSI report configuration is associated with a first resource set and a second resource set, wherein the first resource set is configured to use the first model to predict the channel information and/or the CSI, and the second resource set is configured to evaluate a performance of the first model.

In an optional implementation, when the configuration information includes the third CSI report configuration, the determining, by the terminal device, the performance evaluation result of the first model based on the configuration information includes: predicting the channel information and/or the CSI based on the first resource set and the first model to obtain third information, wherein the third information is third CSI and/or third channel information; evaluating the performance of the first model based on the second resource set and the third information to obtain a second performance evaluation result.

In an optional implementation, the second performance evaluation result is represented by an accuracy of the third information, and/or by a similarity between the third information and fourth information; the fourth information is obtained by a terminal device based on the second resource set without using the first model; the fourth information is fourth CSI and/or fourth channel information.

In an optional implementation, when the third information is the third CSI, the fourth information is the fourth CSI; when the third information is the third channel information, the fourth information is the fourth channel information.

In an optional implementation, the first resource set and the second resource set are periodic or semi-persistent periodic resource sets; or the first resource set is a periodic or semi-persistent periodic resource set, and the second resource set is an aperiodic resource set; or the first resource set and the second resource set are aperiodic resource sets.

In an optional implementation, the terminal device reports a third CSI report; when an accuracy of third information is greater than a first preset value, and/or a similarity between the third information and the fourth information is greater than a second preset value, the third CSI report includes third CSI and/or a second performance evaluation result and/or fourth CSI and/or fourth channel information.

In an optional implementation, when the accuracy of the third information is less than or equal to the first preset value, and/or the similarity between the third information and the fourth information is less than or equal to the second preset value, the third CSI report includes the second performance evaluation result and/or the fourth CSI and/or the fourth channel information.

In yet another optional implementation, the configuration information includes a fourth CSI report configuration, and the fourth CSI report configuration is associated with a third resource set, wherein the third resource set is configured to evaluate a performance of the first model.

In an optional implementation, when the configuration information includes the fourth CSI report configuration, the determining, by the terminal device, the performance evaluation result of the first model based on the configuration information includes: evaluating the performance of the first model based on a resource that is in the third resource set and adjacent to a resource used for reporting a CSI report, to obtain a third performance evaluation result; the third resource set is a periodic or semi-persistent periodic resource set, or an aperiodic resource set.

In an optional implementation, the third performance evaluation result is represented by an accuracy of fifth information, and/or by a similarity between the fifth information and sixth information; the fifth information is fifth CSI and/or fifth channel information, wherein the fifth information is obtained by the terminal device using the first model; the sixth CSI or sixth channel information is obtained by the terminal device without using the first model; and the sixth information is sixth CSI and/or sixth channel information.

In an optional implementation, when the fifth information is the fifth CSI, the sixth information is the sixth CSI; when the fifth information is the fifth channel information, the sixth information is the sixth channel information.

In an optional implementation, the terminal device reports a fourth CSI report; when the accuracy of the fifth information is greater than a first preset value, and/or the similarity between the fifth information and the sixth information is greater than a second preset value, the fourth CSI report includes the fifth CSI and/or the third performance evaluation result and/or the sixth CSI and/or the sixth channel information.

In an optional implementation, when the accuracy of the fifth information is less than or equal to the first preset value, and/or the similarity between the fifth information and the sixth information is less than or equal to the second preset value, the fourth CSI report includes the third performance evaluation result and/or the sixth CSI and/or the sixth channel information.

In a second aspect, an embodiment of this application further provides a communication method. The method is applied to a network device and includes: determining configuration information, wherein the configuration information is used to determine a performance evaluation result of a first model, the first model is an artificial intelligence model or a machine learning model, and the first model is used to predict channel information and/or Channel State Information (CSI); sending the configuration information.

It can be seen that the network device determines configuration information for evaluating the performance of the first model, thereby facilitating the terminal device to evaluate the performance of the first model used to predict channel information and/or CSI based on the configuration information, which is further beneficial to improving the accuracy of predicting the channel information and/or the CSI by using the first model.

In an optional implementation, the configuration information includes a first CSI report configuration and a second CSI report configuration associated with the first CSI report configuration; the first CSI report configuration is configured to use the first model to predict the channel information and/or the CSI, and the second CSI report configuration is configured to evaluate a performance of the first model.

In an optional implementation, the network device receives a first CSI report and a second CSI report, wherein the first CSI report includes first CSI, and the second CSI report includes a first performance evaluation result and/or second CSI and/or second channel information; the first CSI is obtained by a terminal device by predicting the channel information and/or the CSI based on the first CSI report configuration and the first model; the first performance evaluation result is obtained by the terminal device by evaluating the performance of the first model based on the second CSI report configuration and the first CSI; the second CSI or the second channel information is obtained by the terminal device without using the first model.

In another optional implementation, the network device receives a second CSI report, wherein the second CSI report includes a first performance evaluation result and/or second CSI and/or second channel information; the first performance evaluation result is obtained by a terminal device by evaluating the performance of the first model based on the second CSI report configuration and first CSI; the first CSI is obtained by the terminal device by predicting the channel information and/or the CSI based on the first CSI report configuration and the first model; the second CSI or the second channel information is obtained by the terminal device without using the first model.

In an optional implementation, the first performance evaluation result is represented by an accuracy of first information, and/or by a similarity between the first information and second information; the first information is the first CSI and/or first channel information, wherein the first channel information is obtained by the terminal device by predicting the channel information and/or the CSI based on the first CSI report configuration and the first model; the second information is obtained by the terminal device without using the first model, and the second information is the second CSI and/or the second channel information.

In an optional implementation, when the first information is the first CSI, the second information is the second CSI; when the first information is the first channel information, the second information is the second channel information.

In another optional implementation, the configuration information includes a third CSI report configuration, and the third CSI report configuration is associated with a first resource set and a second resource set; the first resource set is configured to use the first model to predict the channel information and/or the CSI, and the second resource set is configured to evaluate a performance of the first model.

In an optional implementation, the first resource set and the second resource set are periodic or semi-persistent periodic resource sets; or the first resource set is a periodic or semi-persistent periodic resource set, and the second resource set is an aperiodic resource set; or the first resource set and the second resource set are aperiodic resource sets.

In an optional implementation, the network device receives a third CSI report; wherein the third CSI report includes third CSI and/or a second performance evaluation result and/or fourth CSI and/or fourth channel information, or the third CSI report includes the second performance evaluation result and/or the fourth CSI and/or the fourth channel information; the third CSI is obtained by a terminal device by predicting the channel information and/or the CSI based on the first resource set and the first model; the second performance evaluation result is obtained by the terminal device by evaluating the performance of the first model based on the second resource set and the third CSI; the fourth CSI or the fourth channel information is obtained by the terminal device based on the second resource set without using the first model.

In an optional implementation, the second performance evaluation result is represented by an accuracy of third information, and/or by a similarity between the third information and fourth information; the third information is the third CSI and/or third channel information; the third channel information is obtained by the terminal device by predicting the channel information and/or the CSI based on the first resource set and the first model; the fourth information is obtained by the terminal device based on the second resource set without using the first model, and the fourth information is the fourth CSI and/or the fourth channel information.

In an optional implementation, when the third information is the third CSI, the fourth information is the fourth CSI; when the third information is the third channel information, the fourth information is the fourth channel information.

In yet another optional implementation, the configuration information includes a fourth CSI report configuration, and the fourth CSI report configuration is associated with a third resource set, wherein the third resource set is configured to evaluate a performance of the first model; the third resource set is a periodic or semi-persistent periodic resource set, or an aperiodic resource set.

In an optional implementation, the network device receives a fourth CSI report; the fourth CSI report includes fifth CSI and/or a third performance evaluation result and/or sixth CSI and/or sixth channel information; or the fourth CSI report includes the third performance evaluation result and/or the sixth CSI and/or the sixth channel information; the fifth CSI or fifth channel information is obtained by a terminal device by predicting the channel information and/or the CSI based on the fourth CSI report configuration and the first model; the third performance evaluation result is obtained by the terminal device by evaluating the performance of the first model based on the fourth CSI report configuration; the sixth CSI or the sixth channel information is obtained by the terminal device without using the first model.

In an optional implementation, the third performance evaluation result is represented by an accuracy of fifth information, and/or by a similarity between the fifth information and sixth information; the fifth information is the fifth CSI and/or the fifth channel information; the fifth information is obtained by the terminal device by using the first model; the sixth information is obtained by the terminal device without using the first model, and the sixth information is the sixth CSI and/or the sixth channel information.

In an optional implementation, when the fifth information is the fifth CSI, the sixth information is the sixth CSI; when the fifth information is the fifth channel information, the sixth information is the sixth channel information.

In a third aspect, an embodiment of this application provides a communication apparatus. The communication apparatus is applied to a terminal device and includes:
a communication unit, configured to receive configuration information, wherein the configuration information is used to determine a performance evaluation result of a first model, the first model is an artificial intelligence model or a machine learning model, and the first model is used to predict channel information and/or Channel State Information (CSI);
a determination unit, configured to determine the performance evaluation result of the first model based on the configuration information.

In addition, for other optional implementations of the communication apparatus in this aspect, reference may be made to the related content of the first aspect described above, which will not be elaborated here.

In a fourth aspect, an embodiment of this application further provides a communication apparatus. The communication apparatus is applied to a network device and includes:
a determination unit, configured to determine configuration information, wherein the configuration information is used to determine a performance evaluation result of a first model, the first model is an artificial intelligence model or a machine learning model, and the first model is used to predict channel information and/or Channel State Information (CSI);
a communication unit, configured to send the configuration information.

In addition, for other optional implementations of the communication apparatus in this aspect, reference may be made to the related content of the second aspect described above, which will not be elaborated here.

In a fifth aspect, an embodiment of this application provides a terminal device. The terminal device includes a memory and a processor; optionally, the terminal device further includes a communication interface;
the memory is configured to store a computer program;
the communication interface is configured to receive or send data;
the processor is configured to call the program instructions stored in the memory.

In an optional implementation, when calling the computer program, the processor is configured to perform the following operations:
receiving configuration information, wherein the configuration information is used to determine a performance evaluation result of a first model, the first model is an artificial intelligence model or a machine learning model, and the first model is used to predict channel information and/or Channel State Information (CSI); determining the performance evaluation result of the first model based on the configuration information.

In addition, for other optional implementations of the terminal device in this aspect, reference may be made to the related content of the first aspect described above, which will not be elaborated here.

In a sixth aspect, an embodiment of this application provides a network device. The network device includes a memory and a processor; optionally, the network device further includes a communication interface;
the memory is configured to store a computer program;
the communication interface is configured to receive or send data;
the processor is configured to call the program instructions stored in the memory.

In an optional implementation, when calling the computer program, the processor is configured to perform the following operations:
determining configuration information, wherein the configuration information is used to determine a performance evaluation result of a first model, the first model is an artificial intelligence model or a machine learning model, and the first model is used to predict channel information and/or Channel State Information (CSI); sending the configuration information.

In addition, for other optional implementations of the network device in this aspect, reference may be made to the related content of the second aspect described above, which will not be elaborated here.

In a seventh aspect, an embodiment of this application provides a chip. The chip includes a processor and a communication interface, wherein the communication interface is configured to receive or send data.

In an optional implementation, the processor is configured to cause the chip to execute the following:
receiving configuration information, wherein the configuration information is used to determine a performance evaluation result of a first model, the first model is an artificial intelligence model or a machine learning model, and the first model is used to predict channel information and/or Channel State Information (CSI); determining the performance evaluation result of the first model based on the configuration information.

In addition, for other optional implementations of the chip in this aspect, reference may be made to the related content of the first aspect described above, which will not be elaborated here.

In another optional implementation, the processor is configured to cause the chip to execute the following:
determining configuration information, wherein the configuration information is used to determine a performance evaluation result of a first model, the first model is an artificial intelligence model or a machine learning model, and the first model is used to predict channel information and/or Channel State Information (CSI); sending the configuration information.

In addition, for other optional implementations of the chip in this aspect, reference may be made to the related content of the second aspect described above, which will not be elaborated here.

In an eighth aspect, an embodiment of this application provides a module device. The module device includes a communication module, a power module, a storage module, and a chip, wherein
the power module is configured to provide power to the module device;
the storage module is configured to store data and instructions;
the communication module is configured for internal communication within the module device or for communication between the module device and an external device;
the chip is configured to execute the method according to any one of the first aspect and the second aspect.

In a ninth aspect, an embodiment of this application provides a computer-readable storage medium, configured to store computer software instructions used by the terminal described above, including a program for executing the method according to any one of the first aspect and the second aspect.

In a tenth aspect, an embodiment of this application further provides a computer program product, which, when run on a processor, is configured to implement the method flow according to any one of the first aspect and the second aspect.

### BRIEF DESCRIPTION OF THE DRAWINGS

FIG. 1 is a schematic structural diagram of a communication system according to an embodiment of this application;
FIG. 2 is a schematic flowchart of a communication method according to an embodiment of this application;
FIG. 3 is a schematic structural diagram of a communication apparatus according to an embodiment of this application;
FIG. 4 is a schematic structural diagram of another communication apparatus according to an embodiment of this application;
FIG. 5 is a schematic structural diagram of a communication device according to an embodiment of this application;
FIG. 6 is a schematic structural diagram of a module device according to an embodiment of this application.

### DETAILED DESCRIPTION

The following describes embodiments of this application with reference to the accompanying drawings in the embodiments of this application.

The terms "first", "second", and the like in the specification, claims, and drawings of this application are used to distinguish between different objects and are not intended to describe a particular order. "First", "second", and the like are used for descriptive purposes only and should not be understood as indicating or implying relative importance or implicitly indicating the number of indicated technical features. Therefore, features defined with "first" and "second" may explicitly or implicitly include one or more of the features. In the description of the embodiments, unless otherwise specified, "a plurality of" means two or more.

Furthermore, the terms "include", "have", and any variations thereof are intended to cover non-exclusive inclusion. For example, a process, method, system, product, or device that includes a series of steps or units is not limited to the listed steps or units, but optionally further includes steps or units not listed, or optionally further includes other steps or units inherent to such processes, methods, products, or devices.

It should be understood that, in this application, "a plurality of" means two or more. "And/or" is used to describe an association relationship between associated objects, indicating that three relationships may exist. For example, "A and/or B" may indicate the following three cases: only A exists, only B exists, and both A and B exist, wherein A and B may be singular or plural. The character "/" generally indicates an "or" relationship between the associated objects. "When" and "if" both refer to performing corresponding processing under certain objective circumstances, are not intended to limit time, do not require a judgment action during implementation, and do not imply other limitations.

In the embodiments of this application, terms such as "exemplary" or "for example" are used to indicate examples, illustrations, or explanations. Any embodiment or design solution described as "exemplary" or "for example" in the embodiments of this application should not be construed as being more preferred or advantageous than other embodiments or design solutions. Rather, the use of the terms "exemplary" or "for example" is intended to present the related concepts in a specific manner to facilitate understanding.

To better understand the communication method disclosed in the embodiments of this application, the system architecture applicable to the embodiments of this application is described.

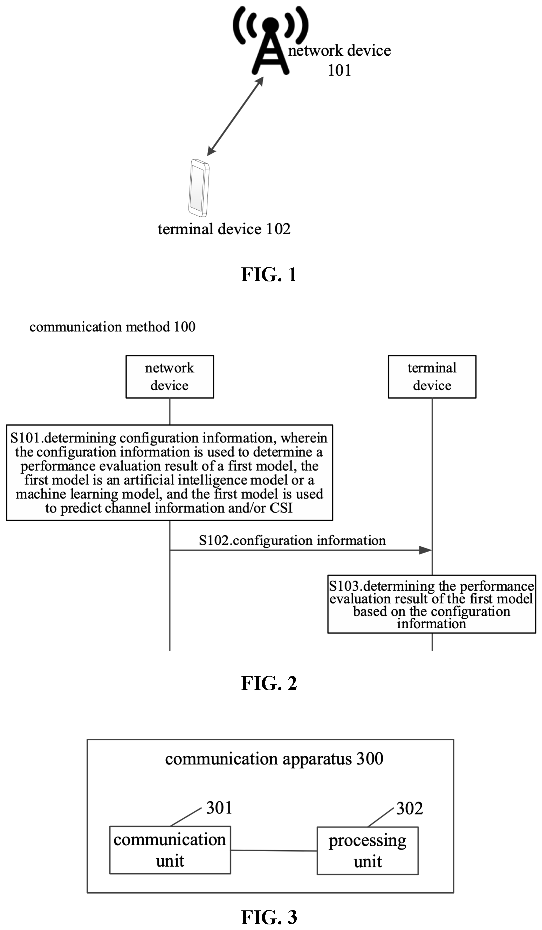

The communication system involved in the embodiments of this application is shown in FIG. 1. The communication system may include but is not limited to one network device and one terminal device. The number and form of devices shown in FIG. 1 are examples and do not constitute a limitation to the embodiments of this application. In practical applications, there may be more than one network device and more than one terminal device. The communication system shown in FIG. 1 is described by taking a network device 101 and a terminal device 102 as examples. The network device 101 may provide network services for the terminal device 102, and the network device 101 may communicate with the terminal device 102. In the embodiments of this application, the communication system may further include other devices that communicate with the network device 101 or the terminal device 102, which is not limited in the embodiments of this application.

The terminal device in the embodiments of this application may also be referred to as a terminal, and may refer to various forms of User Equipment (UE), access terminals, user units, user stations, Mobile Stations (MS), remote stations, remote terminals, mobile devices, user terminals, wireless communication devices, user agents, or user apparatuses. The terminal device may also be a cellular phone, a cordless phone, a Session Initiation Protocol (SIP) phone, a Wireless Local Loop (WLL) station, a Personal Digital Assistant (PDA), a handheld device with wireless communication functions, a computing device, or other processing devices connected to a wireless modem, an in-vehicle device, a wearable device, a terminal device in a fifth-generation mobile communication (5G) network, or a terminal device in a future evolved Public Land Mobile Network (PLMN), which is not limited in the embodiments of this application.

In the embodiments of this application, the terminal device may also have Artificial Intelligence (AI) processing capability, and the network device may also have AI processing capability. For example, the terminal device may have capabilities such as neural network training and inference.

In the embodiments of this application, the terminal device may include a prediction module (for example, an AI module). The prediction module may be used to implement prediction of downlink channel information. For example, second channel information may be predicted or determined based on first channel information, so that the second channel information may not rely on a downlink reference signal, and network resources occupied by the downlink reference signal may be saved. The prediction module may have learning capability, such as Machine Learning (ML) and/or Deep Learning (DL) capability, to learn the first channel information, thereby predicting or determining the second channel information.

Optionally, the prediction module may be a software unit and/or a hardware unit that uses some algorithms to predict channel information. Some algorithms include, for example, a convolutional neural network algorithm, a deep neural network algorithm, and the like. Optionally, the prediction module may be a chip, a chip module, or the like.

Optionally, in the embodiments of this application, the network device may include a prediction module to implement prediction of uplink channel information.

In the embodiments of this application, the network device may be a device having receiving and/or sending functions, and may be used for communication with a terminal device. In some possible implementations, the network device is a physical entity connected to a network, and the network device may include base stations and base station controllers in an access network.

The Base Station (BS) in the embodiments of this application may also be referred to as a base station device, which is a device deployed in a Radio Access Network (RAN) to provide wireless communication functions. For example, a device providing a base station function in a second-generation mobile communication (2G) network includes a Base Transceiver Station (BTS). A device providing a base station function in a third-generation mobile communication (3G) network includes a Node B (NodeB). A device providing a base station function in a fourth-generation mobile communication (4G) network includes an evolved NodeB (eNB). In a Wireless Local Area Network (WLAN), a device providing base station functions is an Access Point (AP). A device providing a base station function in fifth-generation New Radio (NR) includes a gNB and a next-generation evolved NodeB (ng-eNB). The gNB and terminal device communicate using NR technology, the ng-eNB and terminal communicate using Evolved Universal Terrestrial Radio Access (E-UTRA) technology, and both the gNB and the ng-eNB can be connected to a 5G core network. The base station in the embodiments of this application further includes a device providing a base station function in new communication systems in the future.

The base station controller in the embodiments of this application may also be referred to as a base station controller device, which is a device that manages base stations. For example, a Base Station Controller (BSC) in a 2G network, a Radio Network Controller (RNC) in a 3G network, and a device that controls and manages base stations in new communication systems in the future.

This application may be applicable to a 5G communication system, and may also be applicable to a 4G communication system, a 3G communication system, and various new communication systems in the future, such as sixth-generation (6G) mobile communication, seventh-generation (7G) mobile communication, and the like, which is not limited in the embodiments of this application.

Relevant concepts involved in the embodiments of this application are introduced as follows.

### 1. Channel information

In the embodiments of this application, channel information may be used to characterize channel features or characteristics. For example, channel information may be channel matrix information and/or CSI and/or a channel feature vector. Alternatively, channel information may be a CSI report. Alternatively, channel information may also be time-domain information, frequency-domain information, time-frequency-domain information of a channel, or channel information in a delay-Doppler domain, and the like, which is not specifically limited herein. The channel matrix information and CSI are described below.

Channel matrix information may be used to describe information related to a channel matrix. For example, channel matrix information may include one or more of the following: a channel matrix H, an equivalent channel matrix, a precoding matrix W (the precoding matrix W may be derived from the channel matrix H), right singular vectors V of the channel matrix H, eigenvectors *vᵢ* of a square matrix *H^{T} H,* vectors associated with the channel matrix H (e.g., vectors of the channel matrix H under a certain transformation), or vectors associated with the channel matrix *H^{T} H* (e.g., vectors of the channel matrix *H^{T} H* under a certain transformation), etc.

### 2. Channel State Information (CSI)

In the embodiments of this application, CSI may be used to describe information related to channel quality. For example, CSI describes the propagation process of a radio signal between a transmitter and a receiver, including the effects of distance, scattering, fading, etc. on the signal. For downlink transmission, CSI may be used by the terminal device to feed back downlink channel quality to the network device, so that the network device can perform beam management, mobility management, and other processing based on the CSI. The CSI sent by the terminal device to the network device may be carried in a CSI report. For example, the CSI may further include at least one of the following: Channel state information reference signal Resource Indicator (CRI), Rank Indicator (RI), Channel Quality Indicator (CQI), Precoding Matrix Indicator (PMI), Layer Indicator (LI), Layer 1-Reference Signal Receiving Power (L1-RSRP), Layer 1-Signal to Interference plus Noise Ratio (L1-SINR), capability index, Time-Domain Channel Properties (TDCP), etc.

In this application, the terminal device performs channel measurement through a downlink reference signal to obtain channel information. The measurement may also be described as evaluation, detection, or estimation. The downlink reference signal may include, but are not limited to, a Channel State Information-Reference Signal (CSI-RS), a Synchronization Signal Block (SSB), or a Physical Broadcast Channel Demodulation Reference Signal (PBCH DMRS), etc. For example, the terminal device may perform downlink channel measurement based on the CSI-RS to obtain channel matrix information, and then obtain CSI based on the channel matrix information.

### 3. CSI Report

In the embodiments of this application, a CSI report is used to report CSI. For example, a CSI report may include at least one of L1-RSRP, L1-SINR, CSI-related information, etc. Specifically, in some embodiments, a CSI report may be configured by a higher layer parameter CSI report configuration information (CSI-ReportConfig). The CSI-ReportConfig may be configured by a higher layer parameter CSI-MeasConfig. The CSI-MeasConfig may indicate or include the following two higher layer parameters: CSI report configuration information (CSI-ReportConfig) and CSI resource configuration information (CSI-ResourceConfig).

The CSI-ReportConfig may indicate or include CSI-ResourceConfigId. Through the CSI-ResourceConfigId, the CSI-ReportConfig may be associated with the CSI-ResourceConfig, or the CSI-ResourceConfig may be associated with the CSI-ReportConfig. Association may also be described as mapping or correspondence, etc. In the embodiments of this application, when the CSI-ReportConfig indicates or includes the CSI-ResourceConfigId, it can be understood that the CSI report configuration information has associated CSI resource configuration information. When the CSI-ReportConfig does not indicate or does not include the CSI-ResourceConfigId, it can be understood that the CSI report configuration information has no associated CSI resource configuration information.

The CSI-ResourceConfig may be used to configure CSI-RS resources for CSI measurement. The CSI-ResourceConfig may configure a resource set (e.g., ResourceSet), and the ResourceSet may include one or more CSI-RS resources (e.g., CSI-RS-Resource).

The CSI-ResourceConfig may indicate or include: a Non-Zero Power-Channel State Information-Reference Signal (NZP-CSI-RS) resource set (NZP-CSI-RS-ResourceSet), or a CSI Interference Measurement (CSI-IM) resource set (CSI-IM-ResourceSet), or a Synchronization Signal/physical broadcast channel Block (SSB) resource set (SSB-ResourceSet).

The NZP-CSI-RS-ResourceSet may be used for channel measurement and/or interference measurement; the CSI-IM-ResourceSet may be used for interference measurement; the SSB-ResourceSet may be used for channel measurement.

A type of a CSI-RS resource may be periodic, semi-persistent, or aperiodic.

A report configuration type (reportConfigType) in the CSI-ReportConfig may be used to indicate a report type of a CSI report. The report type of the CSI report may be a periodic CSI report, an aperiodic CSI report, or a semi-persistent CSI report. The CSI report may be transmitted via a Physical Uplink Control Channel (PUCCH) or a Physical Uplink Shared Channel (PUSCH).

In the embodiments of this application, "prediction" may also be understood as estimating or inferring information in advance. For example, "predicting channel information and/or Channel State Information (CSI)" refers to estimating or inferring channel information and/or the CSI in advance. To improve the accuracy of predicting Channel State Information (CSI), an AI technology is introduced. Specifically, CSI is obtained by predicting channel information and/or CSI using an AI model or a Machine Learning (ML) model. Compared with the terminal device determining CSI by itself based on a Channel State Information-Reference Signal (CSI-RS), a manner in which the CSI is obtained based on the AI model or the ML model has higher accuracy, so that the CSI fed back by the terminal device to a network device has higher accuracy, and a subsequent transmission can better match a channel environment.

However, in a process in which the terminal device uses the AI model or the ML model, the performance of the AI model or the ML model may change, thereby reducing the accuracy of predicting channel information and/or CSI. Therefore, how to monitor the performance of the AI model or the ML model is a problem to be urgently studied.

An embodiment of this application provides a communication method. In the communication method, a network device determines configuration information, wherein the configuration information is used to determine a performance evaluation result of a first model, the first model is an artificial intelligence model or a machine learning model, and the first model is used to predict channel information and/or CSI. The network device sends the configuration information to a terminal device. The terminal device determines the performance evaluation result of the first model based on the configuration information. It can be seen that the terminal device can evaluate the performance of the first model based on the configuration information configured by the network device for determining the performance evaluation result of the first model, which is beneficial to improving the accuracy of predicting the channel information and/or the CSI by using the first model.

Based on the above description, an embodiment of this application proposes a communication method 100. FIG. 2 is a schematic flowchart of the communication method 100. The method includes, but is not limited to, the following steps.

Step S101: a network device determines configuration information, wherein the configuration information is used to determine a performance evaluation result of a first model, the first model is an artificial intelligence model or a machine learning model, and the first model is used to predict channel information and/or Channel State Information (CSI).

The first model is a model configured inside a terminal device for predicting channel information and/or CSI. For example, the first model is configured in a processing module of the terminal device. The first model is obtained by the terminal device through training using a large amount of training data, and the training data may be obtained based on CSI-RS received by the terminal device.

Optionally, the first model is obtained by the network device through training using a large amount of training data and is used to predict channel information and/or CSI. The network device sends the trained first model to the terminal device, so that the terminal device predicts channel information and/or CSI based on the first model.

In addition, the first model may also be another intelligent model/another model than an AI model or an ML model, which is not limited in the embodiments of this application. In the embodiments of this application, the first model may also be understood as one or more algorithms. For example, the first model is an AI algorithm. As another example, the first model is an ML algorithm. In the embodiments of this application, the first model may also be understood as a module based on an AI/ML algorithm. In the embodiments of this application, the first model may also be understood as a signal processing module based on an AI/ML algorithm. In the embodiments of this application, the first model may also be understood as an operation based on AI/ML. In the embodiments of this application, the first model may also be understood as including one or more models/algorithms.

In an optional implementation, the configuration information includes a first CSI report configuration and a second CSI report configuration associated with the first CSI report configuration. The first CSI report configuration is configured to use the first model to predict the channel information and/or the CSI, and the second CSI report configuration is configured to evaluate a performance of the first model.

The second CSI report configuration, which is configured to evaluate the performance of the first model, may be configured in an explicit manner. For example, the second CSI report configuration is configured to report the performance evaluation result of the first model, such as reporting Squared General Cosine Similarity (SGCS). Optionally, the second CSI report, which is configured to evaluate the performance of the first model, may also be configured in an implicit manner. For example, the second CSI report configuration is configured to stop using the first model when a first condition is met, wherein the first condition is that the performance evaluation result of the first model is less than a preset value. "Stop using the first model" may also be understood as "deactivate" the first model.

It can be seen that the network device configures, through the configuration information, a first CSI report configuration for the terminal device to use the first model to predict channel information and/or CSI, thereby facilitating the terminal device to predict channel information and/or CSI based on the first CSI report configuration and the first model. The network device also configures, through the configuration information, a second CSI report configuration for the terminal device to evaluate the performance of the first model, thereby facilitating the terminal device to determine the performance of the first model based on the second CSI report configuration. This manner enables the terminal device to use the first model to predict channel information and/or CSI and monitor the performance of the first model.

It can be understood that the first CSI report configuration implicitly associates a first CSI resource configuration identity (ID), and the second CSI report configuration implicitly associates a second CSI resource configuration ID. This manner facilitates the terminal device to determine resources for predicting channel information and/or CSI based on the first CSI resource configuration ID associated with the first CSI report configuration, and to determine resources for evaluating the performance of the first model based on the second CSI resource configuration ID associated with the second CSI report configuration.

It can be understood that the association between the first CSI report configuration and the second CSI report configuration may be implemented in an explicit manner or an implicit manner. For example: the first CSI report configuration information includes information #a, which is used to indicate its association with the second CSI report configuration. For example: the second CSI report configuration information includes information #b, which is used to indicate its association with the first CSI report configuration. Information #a and information #b may be the same information. Information #a and information #b may be different information.

In another optional implementation, the configuration information includes a third CSI report configuration, wherein the third CSI report configuration is associated with a first resource set and a second resource set. The first resource set is configured to use the first model to predict the channel information and/or the CSI, and the second resource set is configured to evaluate a performance of the first model.

The first resource set includes one or more resources, and the second resource set includes one or more resources.

In an optional implementation, the first resource set and the second resource set are periodic or semi-persistent periodic resource sets. It can be understood that the resources in the first resource set are periodic resources or semi-persistent periodic resources; the resources in the second resource set are periodic resources or semi-persistent periodic resources.

Optionally, the first resource set is a periodic or semi-persistent periodic resource set, and the second resource set is an aperiodic resource set. It can be understood that the resources in the first resource set are periodic resources or semi-persistent periodic resources; the resources in the second resource set are aperiodic resources.

Optionally, the first resource set and the second resource set are aperiodic resource sets. It can be understood that the resources in both the first resource set and the second resource set are aperiodic resources.

It can be seen that the network device configures the first resource set and the second resource set for the terminal device through the configuration information. This facilitates the terminal device to predict channel information and/or CSI based on the first resource set and the first model, and to evaluate the performance of the first model based on the second resource set.

In yet another optional implementation, the configuration information includes a fourth CSI report configuration, wherein the fourth CSI report configuration is associated with a third resource set, and the third resource set is configured to evaluate a performance of the first model. The third resource set includes one or more resources.

Optionally, the third resource set is a periodic or semi-persistent periodic resource set. It can be understood that the resources in the third resource set are periodic resources or semi-persistent periodic resources. Optionally, the third resource set is an aperiodic resource set. It can be understood that the resources in the third resource set are aperiodic resources.

It can be seen that the network device configures, through the configuration information, a third resource set for the terminal device to evaluate the performance of the first model, thereby facilitating the terminal device to evaluate the performance of the first model based on the third resource set.

Optionally, the resource sets mentioned above may also be in the form of resource groups. For example, that the first CSI report configuration is associated with the first resource set and the second CSI report configuration is associated with the second resource set may be: the first CSI report configuration is associated with a first resource group, and the second CSI report configuration is associated with a second resource group. The first resource group is configured to use the first model to predict channel information and/or CSI, and the second resource group is configured to evaluate the performance of the first model. The first resource group includes one or more resources, and the second resource group includes one or more resources. Optionally, the first resource group and the second resource group are periodic or semi-persistent periodic resource groups. Or, the first resource group is a periodic or semi-persistent periodic resource group, and the second resource group is an aperiodic resource group. Or, the first resource group and the second resource group are aperiodic resource groups. As another example, that the fourth CSI report configuration is associated with the third resource set may be: the fourth CSI report configuration is associated with a third resource group, the third resource group is configured to evaluate the performance of the first model, and the third resource group includes one or more resources. Optionally, the third resource group is a periodic or semi-persistent periodic resource group. Optionally, the third resource group is an aperiodic resource group.

For example, that the fourth CSI report configuration is associated with the third resource set may be: the third resource set includes a third resource group and a fourth resource group. The third resource group is configured to predict channel information and/or CSI, and the third resource group includes one or more resources. Optionally, the third resource group is a periodic or semi-persistent periodic resource group. Optionally, the third resource group is an aperiodic resource group. The fourth resource group is configured to evaluate the performance of the first model, and the fourth resource group includes one or more resources. Optionally, the fourth resource group is a periodic or semi-persistent periodic resource group. Optionally, the fourth resource group is an aperiodic resource group.

It can be understood that the configuration information determined by the network device may be one piece of configuration information or multiple pieces of configuration information, which is not limited in the embodiments of this application. For example, when the configuration information includes a third CSI report configuration, the configuration information configured by the network device for the terminal device is five pieces of configuration information. As another example, when the configuration information includes a first CSI report configuration and a second CSI report configuration, the configuration information configured by the network device for the terminal device is one piece of configuration information.

Step S102: the network device sends the configuration information to the terminal device. Correspondingly, the terminal device receives the configuration information from the network device.

Step S103: the terminal device determines the performance evaluation result of the first model based on the configuration information.

It can be understood that the configuration information sent by the network device to the terminal device is used to determine the performance evaluation result of the first model. Therefore, the terminal device can determine the performance evaluation result of the first model based on the configuration information.

Implementations in which the terminal device determines the performance evaluation result of the first model based on the configuration information include, but are not limited to, the following implementations.

Implementation 1: the terminal device determines a first performance evaluation result of the first model based on the first CSI report configuration and the second CSI report configuration.

It can be understood that the network configuration information includes the first CSI report configuration and the second CSI report configuration, and the terminal device determines the first performance evaluation result of the first model based on the first CSI report configuration and the second CSI report configuration. Specifically, the terminal device uses the first model to predict channel information and/or CSI based on the first CSI report configuration to obtain first information, wherein the first information is first CSI and/or first channel information; and the terminal device evaluates the performance of the first model based on the second CSI report configuration and the first information to obtain the first performance evaluation result of the first model.

The terminal device using the first model to predict the channel information and/or the CSI based on the first CSI report configuration to obtain the first information includes: the terminal device determining a first resource based on the first CSI resource configuration ID associated with the first CSI report configuration; the terminal device using the first resource to receive a first CSI-RS from the network device; and the terminal device obtaining the first information based on the first CSI-RS and the first model.

It can be seen that the terminal device uses the first resource determined based on the first CSI report configuration to receive the first CSI-RS from the network device, and uses the information obtained based on the first CSI-RS as input to the first model to obtain the channel information and/or CSI predicted by the first model, thereby obtaining the first information.

The terminal device evaluating the performance of the first model based on the second CSI report configuration and the first information to obtain the first performance evaluation result of the first model includes: the terminal device determining a second resource based on the second CSI resource configuration ID associated with the second CSI report configuration; the terminal device using the second resource to receive a second CSI-RS from the network device; the terminal device determining second information based on the second CSI-RS; and the terminal device evaluating the performance of the first model based on the first information and the second information to obtain the first performance evaluation result. The second information may be second CSI and/or second channel information.

It can be seen that the terminal device can obtain the second information based on the second CSI report configuration and the second resource.

When the first information is the first CSI, the second information is the second CSI; when the first information is the first channel information, the second information is the second channel information. The second CSI or the second channel information is obtained by the terminal device without using the first model.

It can be seen that the terminal device uses the second resource determined based on the second CSI report to receive the second CSI-RS from the network device, determines the second information by itself based on the second CSI-RS, and then obtains the first performance evaluation result of the first model based on the first information and the second information.

It can be understood that the first performance evaluation result may be used to represent an operating state of the first model, or may be used to represent the performance of the first model, or may be used to represent the accuracy of a result obtained based on the first model, or may be used to represent the performance of a communication link/communication system obtained based on the first model. In the embodiments of this application, the first performance evaluation result is not specifically limited, meaning other forms are not excluded.

In an optional implementation, the first performance evaluation result is represented by an accuracy of the first information. Higher the accuracy of the first information indicates that the first information predicted by the terminal device based on the first model is more accurate, and thus the performance of the first model is better.

Optionally, the first performance evaluation result is represented by a similarity between the first information and the second information. Or, the first performance evaluation result is represented by a similarity between the first information and a confidence label, wherein the confidence label is the second information obtained by the terminal device without using the first model. The terminal device may use one or more of General Cosine Similarity (GCS), Squared General Cosine Similarity (SGCS), or Mean Squared Error (MSE), to represent the similarity between the first CSI and the second CSI. A larger value of GCS or SGCS indicates better performance of the first model; or a smaller value of MSE indicates better performance of the first model. In addition, the embodiments of this application do not limit the representation of the similarity between the first information and the second information, meaning the representation method of the similarity between the first information and the second information is not limited to GCS, SGCS, or MSE.

The terminal device uses SGCS to represent the similarity between the first information and the second information. The first performance evaluation result may be determined according to the following rules: SGCS < 0.5, flag1; 0.5 <= SGCS < 0.7, flag2; 0.7 <= SGCS < 0.8, flag3; 0.8 <= SGCS < 0.9, flag4; 0.9 <= SGCS < 0.95, flag5; 0.95 <= SGCS <= 1, flag6. It can be understood that when the terminal device determines the SGCS value between the first information and the second information, it determines the range to which the SGCS belongs based on the SGCS value between the first information and the second information, and the value corresponding to the range to which the SGCS belongs is the first performance evaluation result. For example, the aforementioned flag1, flag2, flag3, flag4, flag5, and flag6 are the first performance evaluation result.

Optionally, the first performance evaluation result is represented by the accuracy of the first information and by the similarity between the first information and the second information. Higher accuracy of the first information and higher similarity between the first information and the second information indicate better performance of the first model.

In an optional implementation, the terminal device reports a first CSI report and a second CSI report, wherein the first CSI report includes the first CSI, and the second CSI report includes the first performance evaluation result and/or the second CSI and/or the second channel information. Correspondingly, the network device receives the first CSI report and the second CSI report from the terminal device.

The manner in which the terminal device reports the first CSI report and the second CSI report enables the network device to learn the first CSI obtained by the terminal device using the first model, and the performance evaluation result of the first model and/or the second CSI and/or the second channel information. Thus, the network device can determine whether to use the first CSI for signal transmission based on the performance evaluation result of the first model. For example, when the performance evaluation result of the first model is good, the network device uses the first CSI for signal transmission. For example, when the performance evaluation result of the first model is poor, the network device does not use the first CSI for signal transmission but uses the second CSI for signal transmission. As another example, when the performance evaluation result of the first model is poor, the network device notifies the terminal device to stop using the first model through indication information.

In another optional implementation, the terminal device reports a second CSI report. Optionally, the terminal device does not report the first CSI report. The second CSI report includes the first performance evaluation result and/or the second CSI and/or the second channel information and/or the first CSI.

In yet another optional implementation, the terminal device reports a second CSI report based on the first performance evaluation result. Optionally, the terminal device does not report the first CSI report. The second CSI report includes the first performance evaluation result and/or the second CSI and/or the second channel information and/or the first CSI.

In still yet another optional implementation, when the accuracy of the first information is greater than a first preset value, and/or the similarity between the first information and the second information is greater than a second preset value, the terminal device reports a first CSI report and a second CSI report. Correspondingly, the network device receives the first CSI report and the second CSI report. The first CSI report and the second CSI report are as described above and will not be repeated.

The first preset value and the second preset value may be pre-negotiated between the terminal device and the network device, or may be configured by the network device for the terminal device.

It can be understood that when the accuracy of the first information is greater than the first preset value, and/or the similarity between the first information and the second information is greater than the second preset value, it indicates that the performance of the first model is good. Therefore, when the performance of the first model is good, the terminal device reports the first CSI report and the second CSI report, so that the network device learns the first CSI obtained based on the first model and the first performance evaluation result of the first model.

In still yet another optional implementation, when the accuracy of the first information is less than or equal to the first preset value, and/or the similarity between the first information and the second information is less than or equal to the second preset value, the terminal device reports a second CSI report. Correspondingly, the network device receives the second CSI report from the terminal device. The second CSI report includes the first performance evaluation result and/or the second CSI and/or the second channel information and/or the first CSI.

When the accuracy of the first information is less than or equal to the first preset value, and/or the similarity between the first information and the second information is less than or equal to the second preset value, it indicates that the performance of the first model is poor. Therefore, the accuracy of the first CSI and/or first channel information obtained by the terminal device based on the first model may be poor and cannot be used by the network device. Furthermore, when the performance of the first model is poor, the terminal device reports the second CSI report and does not report the first CSI report. When the performance of the first model is poor, the manner in which the terminal device reports the second CSI but not the first CSI can reduce signaling overhead.

Optionally, when the network device learns based on the first performance evaluation result that the performance of the first model is poor, it optimizes the first model using training data and informs the terminal device of the optimized first model. Optionally, when the network device learns based on the first performance evaluation result that the performance of the first model is poor, it instructs the terminal device to stop using the first model through indication information, so that the terminal device no longer uses the first model.

Implementation 2: the terminal device determines a second performance evaluation result of the first model based on the third CSI report configuration.

It can be understood that the configuration information includes the third CSI report configuration, and the terminal device determines the performance evaluation result of the first model based on the third CSI report configuration.

Optionally, the first resource set and the second resource set associated with the third CSI report configuration are periodic or semi-persistent periodic resource sets. The first resource set is configured to use the first model to predict channel information and/or CSI, and the second resource set is configured to evaluate the performance of the first model.

Optionally, when the first resource set associated with the third CSI report configuration is a periodic or semi-persistent periodic resource set, and the second resource set associated with the third CSI report configuration is an aperiodic resource set, the terminal device may, based on a pre-defined rule or a protocol specification, consider that the first resource set is configured to use the first model to predict channel information and/or CSI, and that the second resource set is configured to evaluate the performance of the first model.

Optionally, when the first resource set and the second resource set associated with the third CSI report configuration are aperiodic resource sets, the terminal device may, based on a pre-defined rule or a protocol specification, determine that the first resource set is configured to use the first model to predict channel information and/or CSI, and that the second resource set is configured to evaluate the performance of the first model. For example, when the first resource set and the second resource set associated with the third CSI report configuration are aperiodic resource sets, and a slot offset of the first resource set is less than or equal to a preset value, the terminal device determines that the first resource set is configured to use the first model to predict channel information and/or CSI; when the first resource set and the second resource set associated with the third CSI report configuration are aperiodic resource sets, and a slot offset of the second resource set is greater than the preset value, the terminal device determines that the second resource set is configured to evaluate the performance of the first model. As another example, when the first resource set and the second resource set associated with the third CSI report configuration are aperiodic resource sets, and the slot offset of the first resource set is less than or equal to the slot offset of the second resource set, it is determined that the first resource set is configured to use the first model to predict channel information and/or CSI, and it is determined that the second resource set is configured to evaluate the performance of the first model.

Therefore, the terminal device determining the performance evaluation result of the first model based on the third CSI report configuration includes: the terminal device predicting the channel information and/or the CSI based on the first resource set and the first model to obtain third information, wherein the third information is third CSI and/or third channel information; the terminal device evaluating the performance of the first model based on the second resource set and the third information to obtain a second performance evaluation result.

The terminal device predicting the channel information and/or the CSI based on the first resource set and the first model to obtain the third information includes: the terminal device using a resource in the first resource set to receive a first CSI-RS from the network device; the terminal device determining the third information based on the first CSI-RS and/or the first model; the terminal device using a resource in the second resource set to receive a second CSI-RS from the network device, and determining fourth information based on the second CSI-RS; and the terminal device comparing the third information and the fourth information to obtain the second performance evaluation result of the first model. The fourth information may be fourth CSI and/or fourth channel information.

It can be seen that the terminal can obtain the fourth information based on the third CSI report configuration and the second resource set.

When the third information is the third CSI, the fourth information is the fourth CSI; when the third information is the third channel information, the fourth information is the fourth channel information. The fourth CSI or the fourth channel information is obtained by the terminal device based on the second resource set without using the first model.

It can be seen that the terminal device obtains the third information based on the first model and the first resource set, and then performs comparative analysis on the third information and the fourth information to obtain the second performance evaluation result of the first model.

Optionally, when the third CSI report configuration is associated with a first CSI resource group and a second CSI resource group, the implementation by which the terminal device determines the second performance evaluation result of the first model may refer to the implementation for the case where the third CSI report configuration is associated with the first CSI resource set and the second CSI resource set, and details are not repeated herein.

It can be understood that the second performance evaluation result may be used to represent the operating state of the first model, or may be used to represent the performance of the first model, or may be used to represent the accuracy of a result obtained based on the first model, or may be used to represent the performance of a communication link/communication system obtained based on the first model. In the embodiments of this application, the second performance evaluation result is not specifically limited, meaning other forms are not excluded.

In an optional implementation, the second performance evaluation result is represented by an accuracy of the third information, and/or by a similarity between the third information and the fourth information. Specifically, the manner of representing the second performance evaluation result is similar to that of the first performance evaluation result, and details are not repeated.

In an optional manner, the terminal device reports a third CSI report based on the third CSI report configuration. The third CSI report includes the third CSI and/or the second performance evaluation result and/or the fourth CSI and/or the fourth channel information.

In an optional implementation, when the accuracy of the third information is greater than a first preset value, and/or the similarity between the third information and the fourth information is greater than a second preset value, the terminal device reports a third CSI report. The third CSI report includes the third CSI and/or the second performance evaluation result and/or the fourth CSI and/or the fourth channel information. The first preset value and the second preset value may refer to those described in Implementation 1 and will not be repeated.

It can be understood that when the accuracy of the third information is greater than the first preset value, and/or the similarity between the third information and the fourth information is greater than the second preset value, it indicates that the performance of the first model is good. Therefore, the third CSI obtained by the terminal device based on the first model can be used by the network device. Accordingly, the terminal device reports the third CSI obtained based on the first model to the network device. Optionally, the terminal device also reports the second performance evaluation result of the first model and/or the fourth CSI and/or the fourth channel information and/or the third CSI, so that the network device learns the performance evaluation result of the first model.

In another optional implementation, when the accuracy of the third information is less than or equal to the first preset value, and/or the similarity between the third information and the fourth information is less than or equal to the second preset value, the terminal device reports a third CSI report. The third CSI report includes the second performance evaluation result and/or the fourth CSI and/or the fourth channel information.

When the accuracy of the third information is less than or equal to the first preset value, and/or the similarity between the third information and the fourth information is less than or equal to the second preset value, it indicates that the performance of the first model is poor. Therefore, the accuracy of the third CSI or third channel information obtained by the terminal device based on the first model may be low, making it unusable for the network device. Accordingly, the terminal device reports the second performance evaluation result of the first model and/or the fourth CSI and/or the fourth channel information, and does not report the third CSI, to save signaling overhead.

In addition, when the network device determines based on the second performance evaluation result that the performance of the first model is poor, the implementations that can be performed may refer to those described in Implementation 1 above and will not be repeated.

Correspondingly, the network device receives the third CSI report. When the accuracy of the third information is greater than the first preset value, and/or the similarity between the third information and the fourth information is greater than the second preset value, the third CSI report includes the third CSI and/or the second performance evaluation result and/or the fourth CSI and/or the fourth channel information; when the accuracy of the third information is less than or equal to the first preset value, and/or the similarity between the third information and the fourth information is less than or equal to the second preset value, the third CSI report includes the second performance evaluation result and/or the fourth CSI and/or the fourth channel information.

Implementation 3: the terminal device determines a third performance evaluation result of the first model based on the fourth CSI report configuration.

It can be understood that when the configuration information includes the fourth CSI report configuration, the terminal device determines the third performance evaluation result of the first model based on the fourth CSI report configuration. Specifically, the terminal device evaluates the performance of the first model based on a resource that is in the third resource set and adjacent to a resource used for reporting a CSI report, to obtain the third performance evaluation result. The fourth CSI report configuration is associated with the third resource set.

The resource used by the terminal device for reporting the CSI report may be preconfigured by the network device for the terminal device. The resource used by the terminal device for reporting the CSI report may be a resource configured by the network device (e.g., through Radio Resource Control (RRC) signaling and/or Medium Access Control (MAC) signaling and/or Downlink Control Information (DCI)) for the terminal device.

It can be understood that "adjacent" is described from the time dimension. "A resource adjacent to the resource used for reporting the CSI report" can be understood as "a resource that is closest in time to the resource used for reporting the CSI report".

It can be understood that the terminal device receives first CSI-RS from the network device based on all or part of the resources in the third resource set other than the resource adjacent to the resource used for reporting the CSI report, and then determines fifth information based on the information obtained from the first CSI-RS and the first model. In addition, the terminal device receives second CSI-RS from the network device based on the resource in the third resource set that is adjacent to the resource used for reporting the CSI report, and determines sixth information. The terminal device compares the fifth information and the sixth information to obtain the third performance evaluation result of the first model.

The fifth information is fifth CSI and/or fifth channel information. The sixth information is sixth CSI and/or sixth channel information. When the fifth information is the fifth CSI, the sixth information is the sixth CSI; when the fifth information is the fifth channel information, the sixth information is the sixth channel information. The fifth CSI or the fifth channel information is obtained by the terminal device using the first model, and the sixth CSI or the sixth channel information is obtained by the terminal device without using the first model.

Optionally, when a fourth CSI report configuration is associated with a third resource group, an implementation by which a terminal device determines a third performance evaluation result of a first model based on the fourth CSI report configuration is similar to an implementation for the case where the fourth CSI report configuration is associated with the third resource set and the terminal device determines the third performance evaluation result of the first model based on the fourth CSI report configuration, and details are not repeated herein.

It can be understood that the third performance evaluation result may be used to represent the operating state of the first model, or may be used to represent the performance of the first model, or may be used to represent the accuracy of a result obtained based on the first model, or may be used to represent the performance of a communication link/communication system obtained based on the first model. In the embodiments of this application, the third performance evaluation result is not specifically limited, meaning other forms are not excluded.

In an optional implementation, the third performance evaluation result is represented by an accuracy of the fifth information, and/or by a similarity between the fifth information and the sixth information. Specifically, the manner of representing the third performance evaluation result is similar to that of the first performance evaluation result, and details are not repeated.

In an optional manner, the terminal device reports a fourth CSI report based on the fourth CSI report configuration. The fourth CSI report includes the fifth CSI and/or the third performance evaluation result and/or the sixth CSI and/or the sixth channel information.

In an optional implementation, when the accuracy of the fifth information is greater than a first preset value, and/or the similarity between the fifth information and the sixth information is greater than a second preset value, the terminal device reports a fourth CSI report. The fourth CSI report includes the fifth CSI and/or the third performance evaluation result and/or the sixth CSI and/or the sixth channel information. The first preset value and the second preset value may refer to those described in Implementation 1 above and will not be repeated.

It can be understood that when the accuracy of the fifth information is greater than the first preset value, and/or the similarity between the fifth information and the sixth information is greater than the second preset value, it indicates that the performance of the first model is good. Therefore, the fifth CSI obtained by the terminal device based on the first model can be used by the network device. Accordingly, the terminal device reports the fifth CSI obtained based on the first model to the network device. Optionally, the terminal device also reports the third performance evaluation result of the first model and/or the sixth CSI and/or the sixth channel information.

In another optional implementation, when the accuracy of the fifth information is less than or equal to the first preset value, and/or the similarity between the fifth information and the sixth information is less than or equal to the second preset value, the terminal device reports a fourth CSI report. The fourth CSI report includes the third performance evaluation result and/or the sixth CSI and/or the sixth channel information.

It can be understood that when the accuracy of the fifth information is less than or equal to the first preset value, and/or the similarity between the fifth information and the sixth information is less than or equal to the second preset value, it indicates that the performance of the first model is poor. Therefore, the accuracy of the fifth information obtained by the terminal device based on the first model may be low, making it unusable for the network device. Therefore, the terminal device reports the third performance evaluation result of the first model and/or the sixth CSI and/or the sixth channel information, and does not report the fifth CSI, to save signaling overhead.

Correspondingly, the network device receives the fourth CSI report. When the accuracy of the fifth information is greater than the first preset value, and/or the similarity between the fifth information and the sixth information is greater than the second preset value, the fourth CSI report includes the fifth CSI and/or the third performance evaluation result and/or the sixth CSI and/or the sixth channel information. When the accuracy of the fifth information is less than or equal to the first preset value, and/or the similarity between the fifth information and the sixth information is less than or equal to the second preset value, the fourth CSI report includes the third performance evaluation result and/or the sixth CSI and/or the sixth channel information.

It can be seen that, in the embodiments of this application, the terminal device evaluates the performance of the first model based on the configuration information configured by the network device for determining the performance evaluation result of the first model, to obtain the performance evaluation result. The first model is a model used to predict channel information and/or CSI, which is beneficial to improving the accuracy of predicting the channel information and/or the CSI by using the first model.

Refer to FIG. 3. FIG. 3 is a schematic structural diagram of a communication apparatus 300 according to an embodiment of this application. The communication apparatus 300 may be used in a terminal device.

In an implementation, the communication apparatus 300 may include:
a communication unit 301, configured to receive configuration information, wherein the configuration information is used to determine a performance evaluation result of a first model, the first model is an artificial intelligence model or a machine learning model, and the first model is used to predict channel information and/or Channel State Information (CSI); and
a processing unit 302, configured to determine the performance evaluation result of the first model based on the configuration information.

In an optional implementation, the configuration information includes a first CSI report configuration and a second CSI report configuration associated with the first CSI report configuration; the first CSI report configuration is configured to use the first model to predict the channel information and/or the CSI, and the second CSI report configuration is configured to evaluate a performance of the first model.

In an optional implementation, the processing unit 302, when determining the performance evaluation result of the first model based on the configuration information, is specifically configured to: predict the channel information and/or the CSI based on the first CSI report configuration and the first model to obtain first information, wherein the first information is first CSI and/or first channel information; and evaluate the performance of the first model based on the second CSI report configuration and the first information to obtain a first performance evaluation result.

In an optional implementation, the first performance evaluation result is represented by an accuracy of the first information, and/or by a similarity between the first information and second information; the second information is obtained by a terminal device without using the first model; and the second information is second CSI and/or second channel information.

In an optional implementation, when the first information is the first CSI, the second information is second CSI; when the first information is the first channel information, the second information is second channel information.

In an optional implementation, the communication unit 301 is further configured to report a first CSI report and a second CSI report, wherein the first CSI report includes the first CSI, and the second CSI report includes the first performance evaluation result and/or the second CSI and/or the second channel information.

In another optional implementation, the communication unit 301 is further configured to: when the accuracy of the first information is greater than a first preset value, and/or the similarity between the first information and the second information is greater than a second preset value, report the first CSI report and the second CSI report, wherein the first CSI report includes the first CSI, and the second CSI report includes the first performance evaluation result and/or the second CSI and/or the second channel information; and when the accuracy of the first information is less than or equal to the first preset value, and/or the similarity between the first information and the second information is less than or equal to the second preset value, report the second CSI report.

In another optional implementation, the configuration information includes a third CSI report configuration; the third CSI report configuration is associated with a first resource set and a second resource set, wherein the first resource set is configured to use the first model to predict the channel information and/or the CSI, and the second resource set is configured to evaluate a performance of the first model.

In an optional implementation, the processing unit 302, when determining the performance evaluation result of the first model based on the configuration information, is specifically configured to: predict the channel information and/or the CSI based on the first resource set and the first model to obtain third information, wherein the third information is third CSI and/or third channel information; and evaluate the performance of the first model based on the second resource set and the third information to obtain a second performance evaluation result.

In an optional implementation, the second performance evaluation result is represented by an accuracy of the third information, and/or by a similarity between the third information and fourth information; the fourth information is obtained by a terminal device based on the second resource set without using the first model; and the fourth information is fourth CSI and/or fourth channel information.

In an optional implementation, when the third information is the third CSI, the fourth information is fourth CSI; when the third information is the third channel information, the fourth information is fourth channel information.

In an optional implementation, the first resource set and the second resource set are periodic or semi-persistent periodic resource sets; or the first resource set is a periodic or semi-persistent periodic resource set, and the second resource set is an aperiodic resource set; or the first resource set and the second resource set are aperiodic resource sets.

In an optional implementation, the communication unit 301 is further configured to report a third CSI report; when the accuracy of the third information is greater than a first preset value, and/or the similarity between the third information and the fourth information is greater than a second preset value, the third CSI report includes the third CSI and/or the second performance evaluation result and/or the fourth CSI and/or the fourth channel information.

In an optional implementation, when the accuracy of the third information is less than or equal to the first preset value, and/or the similarity between the third information and the fourth information is less than or equal to the second preset value, the third CSI report includes the second performance evaluation result and/or the fourth CSI and/or the fourth channel information.

In another optional implementation, the configuration information includes a fourth CSI report configuration, wherein the fourth CSI report configuration is associated with a third resource set, and the third resource set is configured to evaluate a performance of the first model.

In yet another optional implementation, the processing unit 302, when determining the performance evaluation result of the first model based on the configuration information, is specifically configured to: evaluate the performance of the first model based on a resource that is in the third resource set and adjacent to a resource used for reporting a CSI report, to obtain a third performance evaluation result; wherein the third resource set is a periodic or semi-persistent periodic resource set, or an aperiodic resource set.

In an optional implementation, the third performance evaluation result is represented by an accuracy of fifth information, and/or by a similarity between the fifth information and sixth information; the fifth information is fifth CSI and/or fifth channel information; the fifth information is obtained by a terminal device using the first model; the sixth information is obtained by the terminal device without using the first model; and the sixth information is sixth CSI and/or sixth channel information.

In an optional implementation, when the fifth information is the fifth CSI, the sixth information is sixth CSI; when the fifth information is fifth channel information, the sixth information is sixth channel information.

In an optional implementation, the communication unit 301 is further configured to report a fourth CSI report; when the accuracy of the fifth information is greater than a first preset value, and/or the similarity between the fifth information and the sixth information is greater than a second preset value, the fourth CSI report includes the fifth CSI and/or the third performance evaluation result and/or the sixth CSI and/or the sixth channel information.

In an optional implementation, when the accuracy of the fifth information is less than or equal to the first preset value, and/or the similarity between the fifth information and the sixth information is less than or equal to the second preset value, the fourth CSI report includes the third performance evaluation result and/or the sixth CSI and/or the sixth channel information.

The embodiments of this application and the foregoing method embodiments are based on the same concept and therefore achieve the same technical effects. For the specific principles, reference may be made to the description of the foregoing method embodiments, and details are not repeated herein.

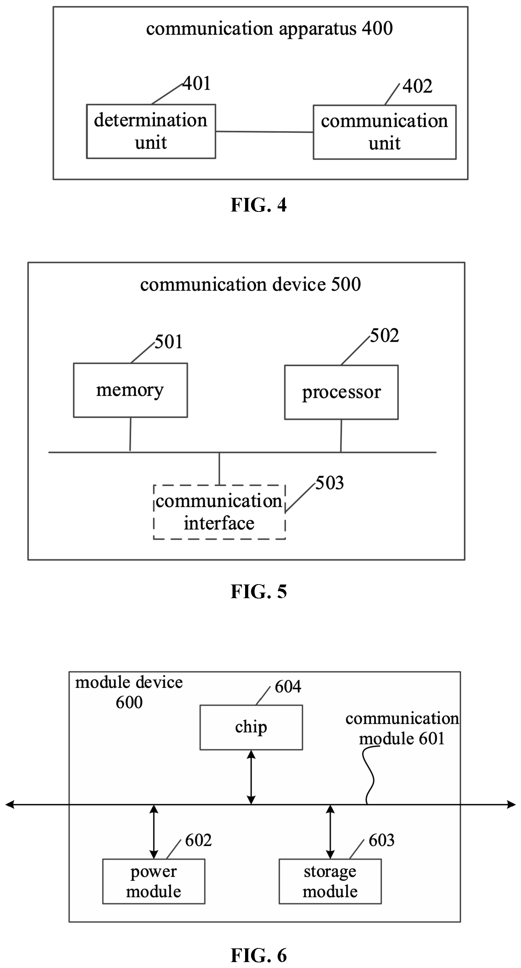

Refer to FIG. 4. FIG. 4 is a schematic structural diagram of a communication apparatus 400 according to an embodiment of this application. The communication apparatus 400 may be used in a network device.

In an implementation, the communication apparatus 400 may include:
a determination unit 401, configured to determine configuration information, wherein the configuration information is used to determine a performance evaluation result of a first model, the first model is an artificial intelligence model or a machine learning model, and the first model is used to predict channel information and/or Channel State Information (CSI); and
a communication unit 402, configured to send the configuration information.

In an optional implementation, the configuration information includes a first CSI report configuration and a second CSI report configuration associated with the first CSI report configuration; the first CSI report configuration is configured to use the first model to predict the channel information and/or the CSI, and the second CSI report configuration is configured to evaluate a performance of the first model.

In an optional implementation, the communication unit 402 is further configured to receive a first CSI report and a second CSI report, wherein the first CSI report includes first CSI, and the second CSI report includes a first performance evaluation result and/or second CSI and/or second channel information; the first CSI is obtained by a terminal device by predicting the channel information and/or the CSI based on the first CSI report configuration and the first model; the first performance evaluation result is obtained by the terminal device by evaluating the performance of the first model based on the second CSI report configuration and the first CSI; and the second CSI or the second channel information is obtained by the terminal device without using the first model.

In another optional implementation, the communication unit 402 is further configured to receive a second CSI report, wherein the second CSI report includes a first performance evaluation result and/or second CSI and/or second channel information; the first performance evaluation result is obtained by a terminal device by evaluating the performance of the first model based on the second CSI report configuration and first CSI; the first CSI is obtained by the terminal device by predicting the channel information and/or the CSI based on the first CSI report configuration and the first model; and the second CSI or the second channel information is obtained by the terminal device without using the first model.

In an optional implementation, the first performance evaluation result is represented by an accuracy of first information, and/or by a similarity between the first information and second information; the first information is the first CSI and/or first channel information, wherein the first channel information is obtained by the terminal device by predicting the channel information and/or the CSI based on the first CSI report configuration and the first model; the second information is obtained by the terminal device without using the first model; and the second information is the second CSI and/or the second channel information.

In an optional implementation, when the first information is the first CSI, the second information is second CSI; when the first information is the first channel information, the second information is second channel information.

In another optional implementation, the configuration information includes a third CSI report configuration, wherein the third CSI report configuration is associated with a first resource set and a second resource set; the first resource set is configured to use the first model to predict the channel information and/or the CSI, and the second resource set is configured to evaluate a performance of the first model.

In an optional implementation, the first resource set and the second resource set are periodic or semi-persistent periodic resource sets; or the first resource set is a periodic or semi-persistent periodic resource set, and the second resource set is an aperiodic resource set; or the first resource set and the second resource set are aperiodic resource sets.

In an optional implementation, the communication unit 402 is further configured to receive a third CSI report; the third CSI report includes third CSI and/or a second performance evaluation result and/or fourth CSI and/or fourth channel information, or the third CSI report includes the second performance evaluation result and/or the fourth CSI and/or the fourth channel information; the third CSI is obtained by a terminal device by predicting the channel information and/or the CSI based on the first resource set and the first model; the second performance evaluation result is obtained by the terminal device by evaluating the performance of the first model based on the second resource set and the third CSI; and the fourth CSI or the fourth channel information is obtained by the terminal device based on the second resource set without using the first model.

In an optional implementation, the second performance evaluation result is represented by an accuracy of third information, and/or by a similarity between the third information and fourth information; the third information is the third CSI and/or third channel information; the third channel information is obtained by the terminal device by predicting the channel information and/or the CSI based on the first resource set and the first model; the fourth information is obtained by a terminal device based on the second resource set without using the first model; and the fourth information is fourth CSI and/or fourth channel information.

In an optional implementation, when the third information is the third CSI, the fourth information is the fourth CSI; when the third information is the third channel information, the fourth information is the fourth channel information.

In yet another optional implementation, the configuration information includes a fourth CSI report configuration, wherein the fourth CSI report configuration is associated with a third resource set; the third resource set is a periodic or semi-persistent periodic resource set, or an aperiodic resource set.

In an optional implementation, the communication unit 402 is further configured to receive a fourth CSI report; the fourth CSI report includes fifth CSI and/or a third performance evaluation result and/or sixth CSI and/or sixth channel information; or the fourth CSI report includes the third performance evaluation result and/or the sixth CSI and/or the sixth channel information; the fifth CSI or fifth channel information is obtained by a terminal device by predicting the channel information and/or the CSI based on the fourth CSI report configuration and the first model; the third performance evaluation result is obtained by the terminal device by evaluating the performance of the first model based on the fourth CSI report configuration; and the sixth CSI or the sixth channel information is obtained by the terminal device without using the first model.

In an optional implementation, the third performance evaluation result is represented by an accuracy of fifth information, and/or by a similarity between the fifth information and sixth information; the fifth information is the fifth CSI and/or the fifth channel information; the fifth information is obtained by the terminal device by using the first model; the sixth information is obtained by the terminal device without using the first model; and the sixth information is sixth CSI and/or sixth channel information.

In an optional implementation, when the fifth information is fifth CSI, the sixth information is sixth CSI; when the fifth information is fifth channel information, the sixth information is sixth channel information.

The embodiments of this application and the foregoing method embodiments are based on the same concept and therefore achieve the same technical effects. For the specific principles, reference may be made to the description of the foregoing method embodiments, and details are not repeated herein.

Refer to FIG. 5. FIG. 5 is a schematic structural diagram of a communication device 500 according to an embodiment of this application. The communication device 500 may be a terminal device or a network device. The communication device 500 may include a memory 501 and a processor 502. Optionally, it may further include a communication interface 503. The memory 501, the processor 502, and the communication interface 503 are connected via one or more communication buses. The communication interface 503 is controlled by the processor 502 to send and receive information.

The memory 501 may include a read-only memory and a random access memory, and provides instructions and data to the processor 502. A part of the memory 501 may further include a non-volatile random access memory.

The communication interface 503 is configured to receive or send data.

The processor 502 may be a central processing unit (CPU). The processor 502 may also be another general-purpose processor, a digital signal processor (DSP), an application-specific integrated circuit (ASIC), a field-programmable gate array (FPGA), or another programmable logic device, a discrete gate or transistor logic device, or a discrete hardware component. The general-purpose processor may be a microprocessor. Optionally, the processor 502 may also be any conventional processor or the like. In particular:
the memory 501 is configured to store program instructions.
the processor 502 is configured to call the program instructions stored in the memory 501.

In an optional implementation, when calling the computer program, the processor 502 is configured to:
receive configuration information, wherein the configuration information is used to determine a performance evaluation result of a first model, the first model is an artificial intelligence model or a machine learning model, and the first model is used to predict channel information and/or Channel State Information (CSI); and
determine the performance evaluation result of the first model based on the configuration information.

In another optional implementation, when calling the computer program, the processor 502 is configured to:
determine configuration information, wherein the configuration information is used to determine a performance evaluation result of a first model, the first model is an artificial intelligence model or a machine learning model, and the first model is used to predict channel information and/or Channel State Information (CSI); and
send the configuration information.

For other implementations of the communication device, reference may be made to the related content of above method embodiments, which will not be elaborated here.

The embodiments of this application and the foregoing method embodiments are based on the same concept and therefore achieve the same technical effects. For the specific principles, reference may be made to the description of the foregoing method embodiments, and details are not repeated herein.

An embodiment of this application further provides a chip. The chip may execute related steps of the terminal device or the network device in the foregoing method embodiments. The chip includes a processor and a communication interface, wherein the communication interface is configured to receive or send data.

In an implementation, a scenario in which the chip executes related steps in the foregoing method embodiments is as follows:
the processor is configured to cause the chip to perform the following operations: receiving configuration information, wherein the configuration information is used to determine a performance evaluation result of a first model, the first model is an artificial intelligence model or a machine learning model, and the first model is used to predict channel information and/or Channel State Information (CSI); and determining the performance evaluation result of the first model based on the configuration information.

In another implementation, a scenario in which the chip executes related steps in the foregoing method embodiments is as follows:
the processor is configured to cause the chip to perform the following operations: determining configuration information, wherein the configuration information is used to determine a performance evaluation result of a first model, the first model is an artificial intelligence model or a machine learning model, and the first model is used to predict channel information and/or Channel State Information (CSI); and sending the configuration information.

For other implementations of the chip, reference may be made to the related content of above method embodiments, which will not be elaborated here.

The embodiments of this application and the foregoing method embodiments are based on the same concept and therefore achieve the same technical effects. For the specific principles, reference may be made to the description of the foregoing method embodiments, and details are not repeated herein.

For various apparatuses or products applied to or integrated into a chip, each module included therein may be implemented entirely by hardware such as circuits, or at least some modules may be implemented by software programs. The software programs run on a processor integrated inside the chip, and the remaining modules (if any) may be implemented by hardware such as circuits.

As shown in FIG. 6, FIG. 6 is a schematic structural diagram of a module device according to an embodiment of this application. The module device 600 may execute related steps of the terminal device or the network device in the foregoing method embodiments. The module device 600 includes: a communication module 601, a power module 602, a storage module 603, and a chip 604.

The power module 602 is configured to provide power for the module device. The storage module 603 is configured to store data and instructions. The communication module 601 is configured for internal communication within the module device or for communication between the module device and an external device. The chip 604 is configured to execute the method executed by the terminal device or the network device in the foregoing method embodiments.

For the implementation of the module device, reference may be made to the related content of above method embodiments, which will not be elaborated here.

The embodiments of this application and the foregoing method embodiments are based on the same concept and therefore achieve the same technical effects. For the specific principles, reference may be made to the description of the foregoing method embodiments, and details are not repeated herein.

An embodiment of this application further provides a computer-readable storage medium. The computer-readable storage medium stores instructions that, when executed on a processor, the method flow of the foregoing method embodiments is implemented.

An embodiment of this application further provides a computer program product. When the computer program product is executed on a processor, the method flow of the foregoing method embodiments is implemented.

Regarding the various modules/units included in the apparatuses and products described in the above embodiments, they may be software modules/units, hardware modules/units, or partly software modules/units and partly hardware modules/units. For example, for apparatuses or products applied to or integrated into a chip, each module/unit included therein may be implemented entirely by hardware such as circuits; alternatively, at least some modules/units may be implemented by software programs. The software programs run on a processor integrated inside the chip, and the remaining modules/units (if any) may be implemented by hardware such as circuits. For apparatuses or products applied to or integrated into a chip module, each module/unit included therein may be implemented entirely by hardware such as circuits, with different modules/units possibly located within the same component (e.g., chip, circuit module, etc.) or different components of the chip module; alternatively, at least some modules/units may be implemented by software programs. The software programs run on a processor integrated inside the chip module, and the remaining modules/units (if any) may be implemented by hardware such as circuits. For apparatuses or products applied to or integrated into a terminal, each module/unit included therein may be implemented entirely by hardware such as circuits, with different modules/units possibly located within the same component (e.g., chip, circuit module, etc.) or different components of the terminal; alternatively, at least some modules/units may be implemented by software programs. The software program runs on a processor integrated inside the terminal, and the remaining modules/units (if any) may be implemented by hardware such as circuits.

It should be noted that, for the aforementioned method embodiments, they are described as a series of action combinations for simplicity. However, those skilled in the art should understand that this application is not limited by the order of actions described, as according to this application, certain operations may be performed in other sequences or concurrently. Furthermore, those skilled in the art should also understand that the embodiments described in the specification are all preferred implementations, and the involved actions and modules are not necessarily mandatory for this application.

The descriptions of the various embodiments provided in this application may refer to each other. Each embodiment has its own focus, and parts not detailed in one embodiment may be understood by referring to relevant descriptions in other embodiments. For convenience and brevity of description, for example, the functions of and operations performed by the apparatuses and devices provided in the embodiments of this application may refer to relevant descriptions in the method embodiments of this application. The method embodiments may also refer to, combine, or cite each other, and the apparatus embodiments may also refer to, combine, or cite each other.

Finally, it should be noted that: the above embodiments are merely intended to illustrate the technical solutions of this application, not to limit them. Although this application has been described in detail with reference to the foregoing embodiments, those of ordinary skill in the art should understand that they may still modify the technical solutions described in the foregoing embodiments or make equivalent replacements to some or all of the technical features. Such modifications or replacements do not cause the essence of the corresponding technical solutions to depart from the scope of the technical solutions of the embodiments of this application.

## Claims

1. A communication method, **characterized by** comprising:
receiving configuration information, wherein the configuration information is used to determine a performance evaluation result of a first model, the first model is an artificial intelligence model or a machine learning model, and the first model is used to predict channel information and/or Channel State Information (CSI);
determining the performance evaluation result of the first model based on the configuration information.

2. The method according to claim 1, **characterized in that**
the configuration information comprises a first CSI report configuration and a second CSI report configuration associated with the first CSI report configuration;
the first CSI report configuration is configured to use the first model to predict the channel information and/or the CSI, and the second CSI report configuration is configured to evaluate a performance of the first model.

3. The method according to claim 2, **characterized in that** the determining the performance evaluation result of the first model based on the configuration information comprises:
predicting the channel information and/or the CSI based on the first CSI report configuration and the first model to obtain first information, wherein the first information is first CSI and/or first channel information;
evaluating the performance of the first model based on the second CSI report configuration and the first information to obtain a first performance evaluation result.

4. The method according to claim 3, **characterized in that** the first performance evaluation result is represented by an accuracy of the first information, and/or by a similarity between the first information and second information;
the second information is obtained by a terminal device without using the first model;
the second information is second CSI and/or second channel information.

5. The method according to claim 4, **characterized in that**
when the first information is the first CSI, the second information is the second CSI; when the first information is the first channel information, the second information is the second channel information.

6. The method according to any one of claims 3 to 5, **characterized by** further comprising:
reporting a first CSI report and a second CSI report, wherein the first CSI report comprises the first CSI, and the second CSI report comprises the first performance evaluation result and/or second CSI and/or second channel information.

7. The method according to claim 4 or 5, **characterized by** further comprising:
when the accuracy of the first information is greater than a first preset value, and/or the similarity between the first information and the second information is greater than a second preset value, reporting a first CSI report and a second CSI report, wherein the first CSI report comprises the first CSI, and the second CSI report comprises the first performance evaluation result and/or the second CSI and/or the second channel information.

8. The method according to claim 4 or 5, **characterized by** further comprising:
when the accuracy of the first information is less than or equal to a first preset value, and/or the similarity between the first information and the second information is less than or equal to a second preset value, reporting a second CSI report, wherein the second CSI report comprises the first performance evaluation result and/or the second CSI and/or the second channel information.

9. The method according to claim 1, **characterized in that**
the configuration information comprises a third CSI report configuration;
the third CSI report configuration is associated with a first resource set and a second resource set, wherein the first resource set is configured to use the first model to predict the channel information and/or the CSI, and the second resource set is configured to evaluate a performance of the first model.

10. The method according to claim 9, **characterized in that** the determining the performance evaluation result of the first model based on the configuration information comprises:
predicting the channel information and/or the CSI based on the first resource set and the first model to obtain third information, wherein the third information is third CSI and/or third channel information;
evaluating the performance of the first model based on the second resource set and the third information to obtain a second performance evaluation result.

11. The method according to claim 10, **characterized in that** the second performance evaluation result is represented by an accuracy of the third information, and/or by a similarity between the third information and fourth information;
the fourth information is obtained by a terminal device based on the second resource set without using the first model;
the fourth information is fourth CSI and/or fourth channel information.

12. The method according to claim 11, **characterized in that**
when the third information is the third CSI, the fourth information is the fourth CSI; when the third information is the third channel information, the fourth information is the fourth channel information.

13. The method according to any one of claims 9 to 12, **characterized in that**
the first resource set and the second resource set are periodic or semi-persistent periodic resource sets; or
the first resource set is a periodic or semi-persistent periodic resource set, and the second resource set is an aperiodic resource set; or
the first resource set and the second resource set are aperiodic resource sets.

14. The method according to claim 9, **characterized by** further comprising:
reporting a third CSI report;
when an accuracy of third information is greater than a first preset value, and/or a similarity between the third information and fourth information is greater than a second preset value, the third CSI report comprises third CSI and/or a second performance evaluation result and/or fourth CSI and/or fourth channel information.

15. The method according to claim 14, **characterized in that**
when the accuracy of the third information is less than or equal to the first preset value, and/or the similarity between the third information and the fourth information is less than or equal to the second preset value, the third CSI report comprises the second performance evaluation result and/or the fourth CSI and/or the fourth channel information.

16. The method according to claim 1, **characterized in that** the configuration information comprises a fourth CSI report configuration, and the fourth CSI report configuration is associated with a third resource set, wherein the third resource set is configured to evaluate a performance of the first model.

17. The method according to claim 16, **characterized in that** the determining the performance evaluation result of the first model based on the configuration information comprises:
evaluating the performance of the first model based on a resource that is in the third resource set and adjacent to a resource used for reporting a CSI report, to obtain a third performance evaluation result;
the third resource set is a periodic or semi-persistent periodic resource set, or an aperiodic resource set.

18. The method according to claim 17, **characterized in that**
the third performance evaluation result is represented by an accuracy of fifth information, and/or by a similarity between the fifth information and sixth information;
the fifth information is fifth CSI and/or fifth channel information, wherein the fifth information is obtained by a terminal device using the first model, the sixth information is obtained by the terminal device without using the first model, and the sixth information is sixth CSI and/or sixth channel information.

19. The method according to claim 18, **characterized in that**
when the fifth information is the fifth CSI, the sixth information is the sixth CSI; when the fifth information is the fifth channel information, the sixth information is the sixth channel information.

20. The method according to claim 18 or 19, **characterized by** further comprising:
reporting a fourth CSI report;
when the accuracy of the fifth information is greater than a first preset value, and/or the similarity between the fifth information and the sixth information is greater than a second preset value, the fourth CSI report comprises the fifth CSI and/or the third performance evaluation result and/or the sixth CSI and/or the sixth channel information.

21. The method according to claim 20, **characterized in that**
when the accuracy of the fifth information is less than or equal to the first preset value, and/or the similarity between the fifth information and the sixth information is less than or equal to the second preset value, the fourth CSI report comprises the third performance evaluation result and/or the sixth CSI and/or the sixth channel information.

22. A communication method, **characterized by** comprising:
determining configuration information, wherein the configuration information is used to determine a performance evaluation result of a first model, the first model is an artificial intelligence model or a machine learning model, and the first model is used to predict channel information and/or Channel State Information (CSI);
sending the configuration information.

23. The method according to claim 22, **characterized in that**
the configuration information comprises a first CSI report configuration and a second CSI report configuration associated with the first CSI report configuration;
the first CSI report configuration is configured to use the first model to predict the channel information and/or the CSI, and the second CSI report configuration is configured to evaluate a performance of the first model.

24. The method according to claim 23, **characterized by** further comprising:
receiving a first CSI report and a second CSI report, wherein the first CSI report comprises first CSI, and the second CSI report comprises a first performance evaluation result and/or second CSI and/or second channel information;
the first CSI is obtained by a terminal device by predicting the channel information and/or the CSI based on the first CSI report configuration and the first model; the first performance evaluation result is obtained by the terminal device by evaluating the performance of the first model based on the second CSI report configuration and the first CSI; the second CSI or the second channel information is obtained by the terminal device without using the first model.

25. The method according to claim 23, **characterized by** further comprising:
receiving a second CSI report, wherein the second CSI report comprises a first performance evaluation result and/or second CSI and/or second channel information;
the first performance evaluation result is obtained by a terminal device by evaluating the performance of the first model based on the second CSI report configuration and first CSI; the first CSI is obtained by the terminal device by predicting the channel information and/or the CSI based on the first CSI report configuration and the first model; the second CSI or the second channel information is obtained by the terminal device without using the first model.

26. The method according to claim 24 or 25, **characterized in that**
the first performance evaluation result is represented by an accuracy of first information, and/or by a similarity between the first information and second information;
the first information is the first CSI and/or first channel information, wherein the first channel information is obtained by the terminal device by predicting the channel information and/or the CSI based on the first CSI report configuration and the first model;
the second information is obtained by the terminal device without using the first model; the second information is the second CSI and/or the second channel information.

27. The method according to claim 26, **characterized in that**
when the first information is the first CSI, the second information is the second CSI; when the first information is the first channel information, the second information is the second channel information.

28. The method according to claim 22, **characterized in that**
the configuration information comprises a third CSI report configuration, and the third CSI report configuration is associated with a first resource set and a second resource set;
the first resource set is configured to use the first model to predict the channel information and/or the CSI, and the second resource set is configured to evaluate a performance of the first model.

29. The method according to claim 28, **characterized in that**
the first resource set and the second resource set are periodic or semi-persistent periodic resource sets; or
the first resource set is a periodic or semi-persistent periodic resource set, and the second resource set is an aperiodic resource set; or
the first resource set and the second resource set are aperiodic resource sets.

30. The method according to claim 28 or 29, **characterized by** further comprising:
receiving a third CSI report;
wherein the third CSI report comprises third CSI and/or a second performance evaluation result and/or fourth CSI and/or fourth channel information, or the third CSI report comprises the second performance evaluation result and/or the fourth CSI and/or the fourth channel information;
the third CSI is obtained by a terminal device by predicting the channel information and/or the CSI based on the first resource set and the first model; the second performance evaluation result is obtained by the terminal device by evaluating the performance of the first model based on the second resource set and the third CSI;
the fourth CSI or the fourth channel information is obtained by the terminal device based on the second resource set without using the first model.

31. The method according to claim 30, **characterized in that** the second performance evaluation result is represented by an accuracy of third information, and/or by a similarity between the third information and fourth information;
the third information is the third CSI and/or third channel information;
the third channel information is obtained by the terminal device by predicting the channel information and/or the CSI based on the first resource set and the first model; the fourth information is obtained by the terminal device based on the second resource set without using the first model; the fourth information is the fourth CSI and/or the fourth channel information.

32. The method according to claim 31, **characterized in that**
when the third information is the third CSI, the fourth information is the fourth CSI; when the third information is the third channel information, the fourth information is the fourth channel information.

33. The method according to claim 22, **characterized in that**
the configuration information comprises a fourth CSI report configuration, and the fourth CSI report configuration is associated with a third resource set, wherein the third resource set is configured to evaluate a performance of the first model;
the third resource set is a periodic or semi-persistent periodic resource set, or an aperiodic resource set.

34. The method according to claim 33, **characterized by** further comprising:
receiving a fourth CSI report;
wherein the fourth CSI report comprises fifth CSI and/or a third performance evaluation result and/or sixth CSI and/or sixth channel information; or the fourth CSI report comprises the third performance evaluation result and/or the sixth CSI and/or the sixth channel information;
the fifth CSI or fifth channel information is obtained by a terminal device by predicting the channel information and/or the CSI based on the fourth CSI report configuration and the first model; the third performance evaluation result is obtained by the terminal device by evaluating the performance of the first model based on the fourth CSI report configuration; the sixth CSI or the sixth channel information is obtained by the terminal device without using the first model.

35. The method according to claim 34, **characterized in that**
the third performance evaluation result is represented by an accuracy of fifth information, and/or by a similarity between the fifth information and sixth information;
the fifth information is the fifth CSI and/or the fifth channel information;
the fifth information is obtained by the terminal device by using the first model; the sixth information is obtained by the terminal device without using the first model, and the sixth information is the sixth CSI and/or the sixth channel information.

36. The method according to claim 35, **characterized in that**
when the fifth information is the fifth CSI, the sixth information is the sixth CSI; when the fifth information is the fifth channel information, the sixth information is the sixth channel information.

37. A communication apparatus, **characterized by** comprising:
a communication unit, configured to receive configuration information, wherein the configuration information is used to determine a performance evaluation result of a first model, the first model is an artificial intelligence model or a machine learning model, and the first model is used to predict channel information and/or Channel State Information (CSI);
a determination unit, configured to determine the performance evaluation result of the first model based on the configuration information.

38. A communication apparatus, **characterized by** comprising:
a determination unit, configured to determine configuration information, wherein the configuration information is used to determine a performance evaluation result of a first model, the first model is an artificial intelligence model or a machine learning model, and the first model is used to predict channel information and/or Channel State Information (CSI);
a communication unit, configured to send the configuration information.

39. A terminal device, **characterized in that** the terminal device comprises a processor and a memory, wherein the processor and the memory are interconnected, the memory is configured to store a computer program comprising program instructions, and the processor is configured to call the program instructions to execute the method according to any one of claims 1 to 21.

40. A network device, **characterized in that** the network device comprises a processor and a memory, wherein the processor and the memory are interconnected, the memory is configured to store a computer program comprising program instructions, and the processor is configured to call the program instructions to execute the method according to any one of claims 22 to 36.

41. A chip, **characterized by** comprising a processor and a communication interface, wherein the processor is configured to cause the chip to execute the method according to any one of claims 1 to 21, or is configured to cause the chip to execute the method according to any one of claims 22 to 36.

42. A module device, **characterized in that** the module device comprises a communication module, a power module, a storage module, and a chip, wherein
the power module is configured to provide power to the module device;
the storage module is configured to store data and instructions;
the communication module is configured for internal communication within the module device or for communication between the module device and an external device;
the chip is configured to execute the method according to any one of claims 1 to 21, or to execute the method according to any one of claims 22 to 36.

43. A computer-readable storage medium, **characterized in that** the computer-readable storage medium stores computer-readable instructions that, when executed on a communication apparatus, cause the communication apparatus to execute the method according to any one of claims 1 to 21, or to execute the method according to any one of claims 22 to 36.
